# EUROPEAN PATENT APPLICATION

(11) **EP 4 648 478 A1**
(43) Date of publication of application: **12.11.2025**
(21) Application number: 25175263.0
(22) Date of filing: 09.05.2025
(51) Int. Cl.: H04W 36/00, H04W 36/08

(54) **METHOD OF CELL SWITCHING AND DEVICE USING THE SAME**

(30) Priority: 10.05.2024 US 202463645148 P
(71) Applicant: Industrial Technology Research Institute, 310401 Hsinchu (TW)
(72) Inventor: Huang, Nai-Lun, Zhubei City, Hsinchu County 302 (TW)
(74) Representative: Becker Kurig & Partner Patentanwälte mbB

(57) **Abstract**

A method of cell switching and a first network node and a user equipment using the same method are provided. The method includes initiating a request message to request a cell switch related configuration for at least one candidate cell, wherein the at least one candidate cell belongs to a second network node. Receiving a request acknowledge message from the second network node, wherein the request acknowledge message comprises a first configuration for at least one accepted candidate cell. Transmitting a first message to the second network node to update information of the at least one accepted candidate cell. Transmitting a second configuration to a user equipment.

## Description

### BACKGROUND

### Technical Field

The disclosure is directed to a method of cell switching, a network node, and a user equipment (UE).

### Description of Related Art

Intra-centralized unit (CU) Layer 1/Layer 2 (L1/L2) triggered mobility (LTM) offers improvement in mobility latency compared to Layer based mobility. However, intra-CU LTM is only supported for mobility between cells withing the same Next Generation Node B (gNB) or within the same CU. Accordingly, the opportunities for using LTM are significantly limited.

### SUMMARY

The disclosure provides a method of cell switching, and a network node and a UE using the same method. The disclosure may manage mobility for cell switching between the same CU or between different CUs.

The present disclosure is directed to a method of cell switching performed by a first network node. The method includes initiating a request message to request a cell switch related configuration for at least one candidate cell, wherein the at least one candidate cell belongs to a second network node. Receiving a request acknowledge message from the second network node, wherein the request acknowledge message comprises a first configuration for at least one accepted candidate cell. Transmitting a first message to the second network node to update information of the at least one accepted candidate cell. Transmitting a second configuration to a user equipment.

The present disclosure is directed to a method of cell switching performed by a user equipment. The method includes receiving a configuration for at least one candidate cell from a first network node. Receiving a cell switch command from the first network node. Performing cell switching to a target cell according to the cell switch command. Transmitting a complete message to the target cell to complete the cell switching In response to transmitting the complete message to the target cell, receiving a message from the target cell, wherein the message comprises at least one of the following: information of at least one updated candidate cell, an updated measurement configuration, or an updated centralized unit identifier table.

The present disclosure is directed to a first network node. The first network node includes a transceiver and a processor coupled to the transceiver. The processor is configured to: initiate a request message to request a cell switch related configuration for at least one candidate cell via the transceiver, wherein the at least one candidate cell belongs to a second network node; receive a request acknowledge message from the second network node via the transceiver, wherein the request acknowledge message comprises a first configuration for at least one accepted candidate cell; transmit a first message to the second network node via the transceiver to update information of the at least one accepted candidate cell; and transmit, via the transceiver, a second configuration to a user equipment.

The present disclosure is directed to a user equipment. The user equipment includes a transceiver and a processor coupled to the transceiver. The processor is configured to: receive a configuration for at least one candidate cell from a first network node via the transceiver; receive a cell switch command from the first network node via the transceiver; perform cell switching to a target cell according to the cell switch command; transmit a complete message to the target cell via the transceiver to complete the cell switching; and in response to transmitting the complete message to the target cell, receive a message from the target cell via the transceiver, wherein the message comprises at least one of the following: information at least one updated candidate cell, an updated measurement configuration, or an updated centralized unit identifier table.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a signaling diagram of cell switching according to one embodiment of the present disclosure.
FIG. 2 illustrates a signaling diagram of information transfer at the preparation stage according to one embodiment of the present disclosure.
FIG. 3 illustrates a signaling diagram of information transfer after the target cell is selected according to one embodiment of the present disclosure.
FIG. 4 illustrates a signaling diagram of information transfer after the target cell is selected according to another embodiment of the present disclosure.
FIG. 5 illustrates a flowchart of a method of cell switching according to one embodiment of the present disclosure.
FIG. 6 illustrates a flowchart of a method of cell switching according to one embodiment of the present disclosure.
FIG. 7 illustrates a schematic diagram of a communication device according to one embodiment of the present disclosure.

### DESCRIPTION OF THE EMBODIMENTS

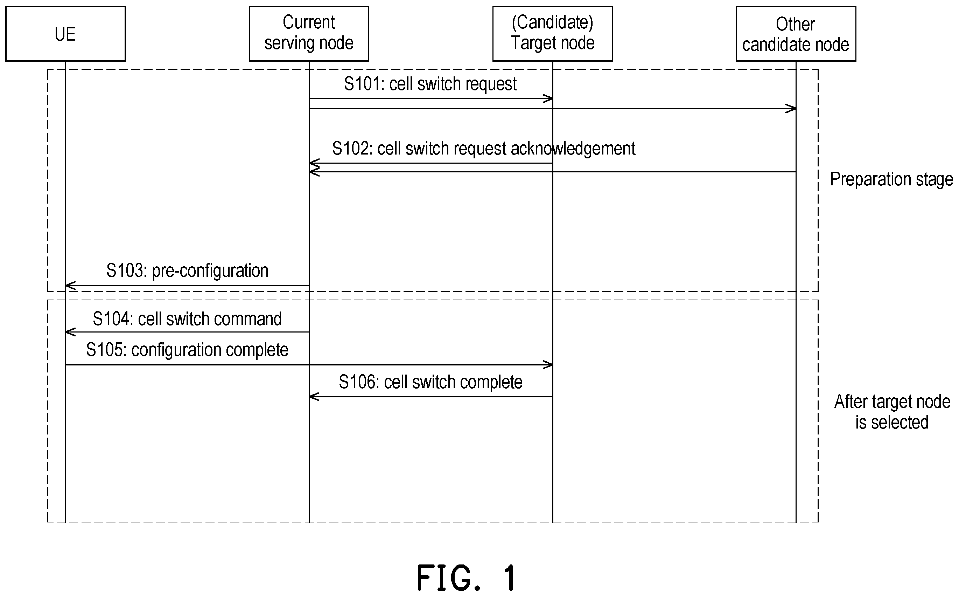

Based on Rel 18 LTM procedure, cell switching is triggered via a LTM cell switch command (CSC) sent by the current serving node. The cell switch command may indicate which candidate cell could be switched to. A serving gNB may hand over the task of triggering a cell switching to a UE by information transfer. FIG. 1 illustrates a signaling diagram of cell switching according to one embodiment of the present disclosure.

In step S101, a current serving node (e.g., a network node, serving cell, serving gNB, or serving CU) may initiate a request message to request a cell switch related configurations for each of one or more candidate cells. Specifically, the current serving node may transmit a cell switch request to one or more candidate nodes, wherein the one or more candidate nodes (e.g., a candidate network node, candidate cell, candidate gNB, or candidate CU) may include a target node. The cell switch request may be associated with an inter-CU LTM configuration or an intra-CU LTM configuration. That is, the preparation of inter-CU LTM configuration or intra-CU LTM configuration may be initiated by the serving node. The cell switch request may instruct one of the one or more candidate nodes to prepare configurations of N candidate cells belonging to the one of the one or more candidate nodes, where N is a positive integer.

In one embodiment, the serving node and the candidate node may be served by the same base station (BS) (e.g., or same CU). In one embodiment, the serving node and the candidate node may be served by different base stations (e.g., or different CUs).

In step S102, the candidate node (e.g., a target node or other candidate node) may transmit a cell switch request acknowledgement (ACK) to the serving node. The serving cell is responsible to collect the configurations and information of candidate cells from multiple cell switch request ACKs, wherein the multiple cell switch request ACKs may be transmitted from multiple candidate nodes respectively. In one embodiment, the cell switch request ACK may include configurations of M accepted candidate cells, where M is a positive integer and M ≤ N. The M accepted candidate cells may be a subset of the N candidate cells. That is, the candidate node may determine whether to prepare the whole or a part of information of the candidate cells requested by the serving node, wherein the requested candidate cells may belong to the candidate node.

In step S103, the serving node may transmit a pre-configuration to the UE for performing cell switching to a target cell. In one embodiment, the pre-configuration may be associated with the inter-CU LTM configuration or intra-CU LTM configuration.

In step S104, the serving node may transmit a cell switch command associated with the target cell to the UE. The UE may perform cell switching from the serving cell (e.g., a cell belonging to the serving node) to the target cell (e.g., a cell belonging to the target node) according to the cell switch command. Specifically, the UE may apply the inter-CU LTM configuration or intra-CU LTM configuration to perform the cell switching.

In step S105, the UE may inform the target node that the UE is well prepared to perform cell switching by transmitting a configuration complete message to the target node. After the configuration complete message is received by the target node, the UE and the target node may perform the cell switching from the serving cell to the target cell.

The target cell and the UE may determine whether the cell switching is completed. If the cell switching is completed, in step S106, the target node may transmit a cell switch complete message (or a success message) to the serving node. The cell switch complete message may indicate that the UE has successfully accessed the target cell of the target node.

The serving node may provide the UE with information about which of the inter-CU LTM configuration or the intra-CU LTM configuration could be applied to perform the cell switching via the pre-configuration message. The UE may determine to apply the inter-CU LTM configuration or intra-CU LTM configuration to perform the cell switching according to the pre-configuration message. Some operations may be inserted into the signaling diagram as shown in FIG. 1 to provide methods of information transfer for the cell switching.

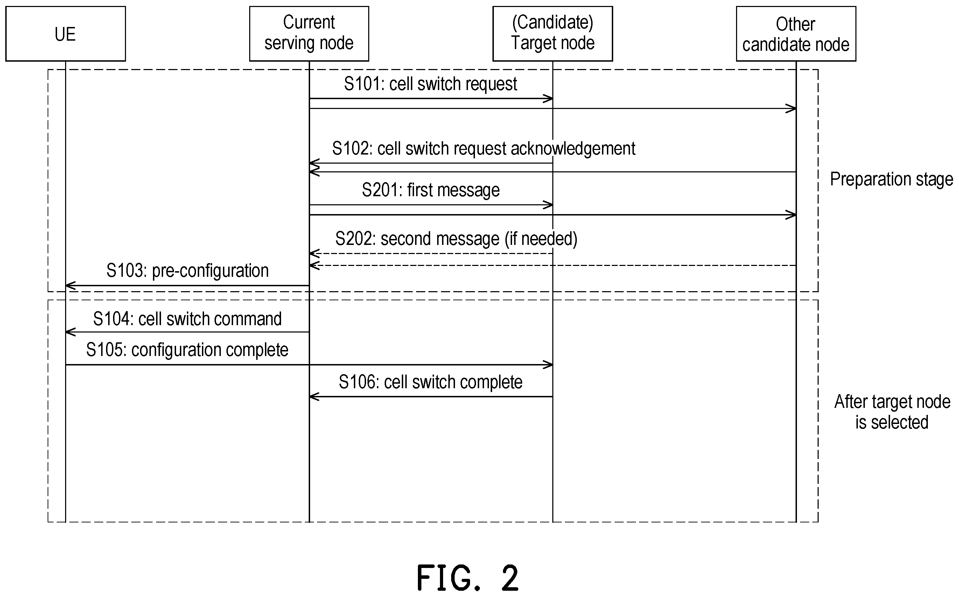

FIG. 2 illustrates a signaling diagram of information transfer at the preparation stage according to one embodiment of the present disclosure. In order to support the subsequent LTM, the serving node (e.g., the source gNB-CU) requires to inform the candidate node (e.g., candidate gNB-CU) about the common channel state information (CSI) resource configuration or the information collected from one or more candidate nodes (e.g., candidate gNB-CUs). Specifically, after receiving the cell switching request ACK from the candidate node (e.g., the target node or other candidate node), in step S201, the serving node may transmit a first message to the candidate node. The first message may be transmitted before the cell switch command or the pre-configuration is transmitted. The first message may be used to update information of candidate cells. The first message may include a candidate cell list, one or more candidate cell measurement configurations, or a CU identifier (ID) table. The contents of the first message can be used by the target node after the cell switching from the serving cell to the target cell is performed by the UE.

In one embodiment, the serving node may communicate with the candidate node via Xn interface.

The candidate cell list may indicate one or more accepted candidate cells for UE to switch to. For example, the candidate cell list may record one or more IDs of the accepted candidate cells. The candidate cell measurement configuration may include the common CSI resource configuration. The CU ID table may include the CU ID (or group identifier, group ID) for the serving cell and the CU IDs (or group IDs) for the one or more accepted candidate cells. The CU ID for the serving cell and the CU ID for the accepted candidate cell may be the same or different.

Alternatively, in step S202, the candidate node (e.g., target node or other candidate node) may transmit a second message to the serving node in response to the first message. The second message may include an updated candidate cell list, one or more updated candidate cell measurement configurations, or an updated CU ID table. The updated candidate cell list may indicate one or more updated accepted candidate cells for UE to switch to. The updated candidate cell measurement configuration may include the updated common CSI resource configuration. The updated CU ID table may include the updated CU ID for the serving cell and the updated CU ID for the one or more updated accepted candidate cells.

For example, after receiving the candidate cell list from the serving node, the candidate node may determine whether the candidate cell list requires to be updated. If the candidate cell list requires to be updated, the candidate node may update the candidate cell list and transmit the updated candidate cell list to the serving node via the second message.

The pre-configuration message transmitted from the serving node to the UE in step S 103 may be associated with the second message. For example, the pre-configuration message may include a CU ID for the serving cell and a CU ID for the target cell. If the CU ID for the serving cell is the same as the CU ID for the target cell, the UE may determine that the serving cell and the target cell are served by the same CU. Accordingly, the UE may apply the intra-CU LTM configuration to perform the cell switching from the serving cell to the target cell. If the CU ID for the serving cell is different from the CU ID for the target cell, the UE may determine that the serving cell and the target cell are served by different CUs respectively. Accordingly, the UE may apply the inter-CU LTM configuration to perform the cell switching from the serving cell to the target cell.

In one embodiment, the serving node may select a target cell from the plurality of candidate cells. The serving node may determine to switch the UE to the target cell. After determining to switch the UE to the target cell, the serving node may transmit the first message to the target node.

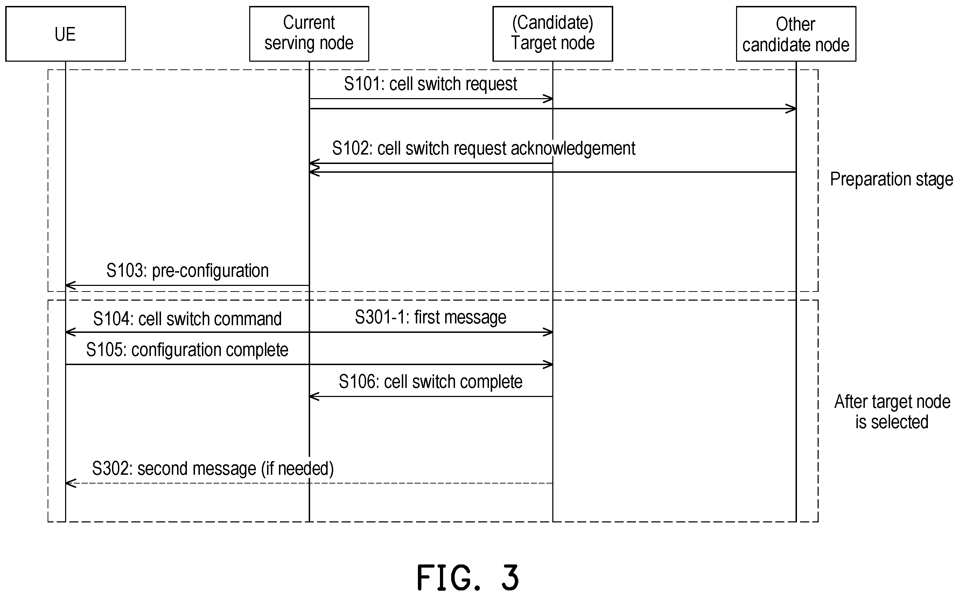

FIG. 3 illustrates a signaling diagram of information transfer after the target cell is selected according to one embodiment of the present disclosure. After the target cell is selected, in step S301-1, the serving node may transmit the first message to the target node in response to the cell switch command being transmitted from the serving node to the UE. The first message may include a candidate cell list, one or more candidate cell measurement configurations, or a CU ID table.

Alternatively, after the cell switching from the serving node to the target node is completed, in step S302, the target node may transmit the second message to the UE. The second message may include an updated candidate cell list, one or more updated candidate cell measurement configurations, or an updated CU ID table.

In one embodiment, the method as shown in FIG. 3 can be the backup plan for the method as shown in FIG. 2. For example, the serving node may try to transmit a first message to one or more candidate nodes in step S201. If the serving node fails to transmit the first message (the failed first message may also be referred to as a third message) to the target node in step S201, the serving node may transmit the first message to the target node again in step S301-1.

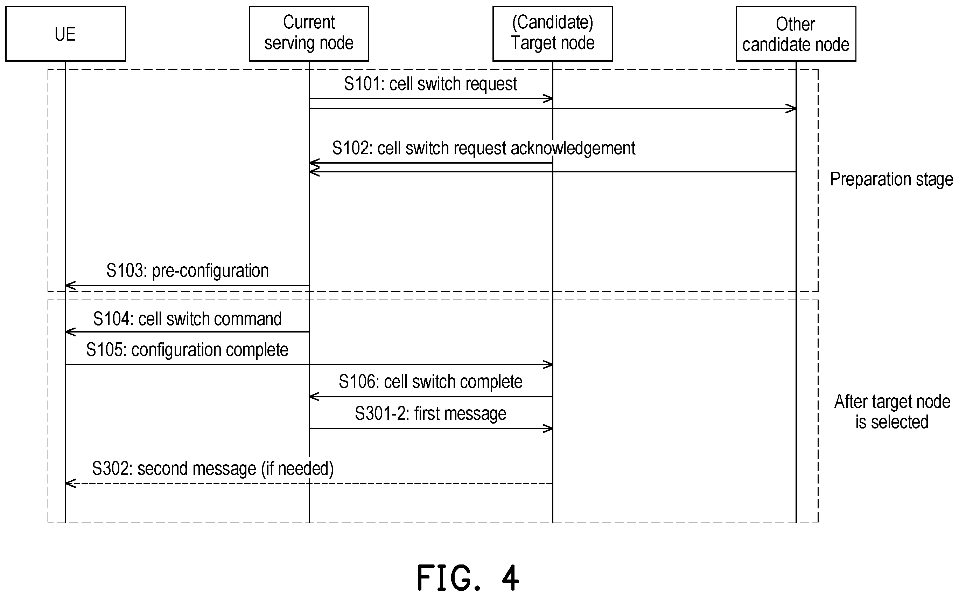

FIG. 4 illustrates a signaling diagram of information transfer after the target cell is selected according to another embodiment of the present disclosure. After the target cell is selected, the target node may transmit a cell switch complete message (or a success message) to the serving cell if the cell switching performed by the UE is successful. The cell switch complete message may indicate that the UE has successfully accessed the target cell of the target node. If the cell switching is successful, in step S301-2, the serving node may transmit the first message to the target node. The first message may include a candidate cell list, one or more candidate cell measurement configurations, or a CU ID table.

Alternatively, after the cell switching from the serving node to the target node is completed, in step S302, the target node may transmit the second message to the UE. The second message may include an updated candidate cell list, one or more updated candidate cell measurement configurations, or an updated CU ID table.

In one embodiment, the method as shown in FIG. 4 can be the backup plan for the methods as shown in FIG. 2 or FIG. 3. For example, the serving node may try to transmit a first message to one or more candidate nodes in step S201 or may try to transmit a first message to the target node in step S301-1. If the serving node fails to transmit the first message to the candidate node or the target node in step S201 or step S301-1, the serving node may transmit the first message to the target node again in step S301-2.

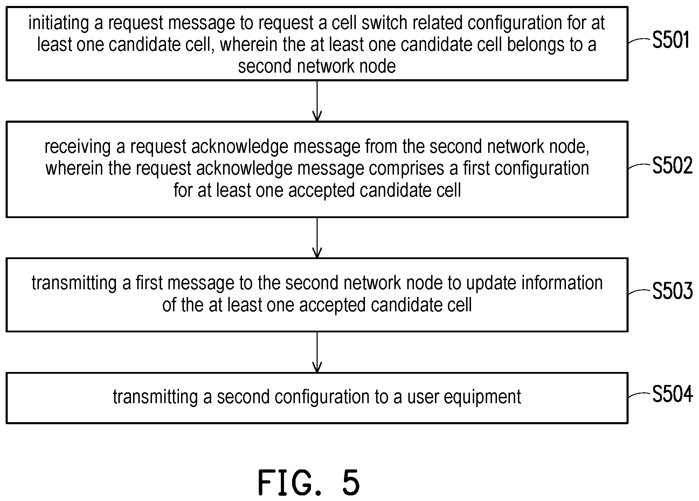

FIG. 5 illustrates a flowchart of a method of cell switching according to one embodiment of the present disclosure, wherein the method is performed by a network node. In step S501, initiating a request message to request a cell switch related configuration for at least one candidate cell, wherein the at least one candidate cell belongs to a second network node. In step S502, receiving a request acknowledge message from the second network node, wherein the request acknowledge message comprises a first configuration for at least one accepted candidate cell. In step S503, transmitting a first message to the second network node to update information of the at least one accepted candidate cell. In step S504, transmitting a second configuration to a user equipment.

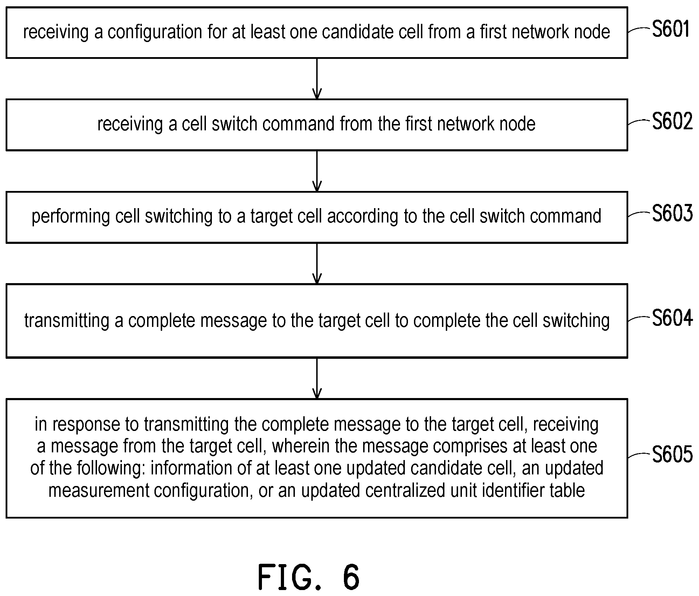

FIG. 6 illustrates a flowchart of a method of cell switching according to one embodiment of the present disclosure, wherein the method is performed by a UE. In step S601, receiving a configuration for at least one candidate cell from a first network node. In step S602, receiving a cell switch command from the first network node. In step S603, performing cell switching to a target cell according to the cell switch command. In step S604, transmitting a complete message to the target cell to complete the cell switching. In step S605, in response to transmitting the complete message to the target cell, receiving a message from the target cell, wherein the message comprises at least one of the following: information of at least one updated candidate cell, an updated measurement configuration, or an updated centralized unit identifier table.

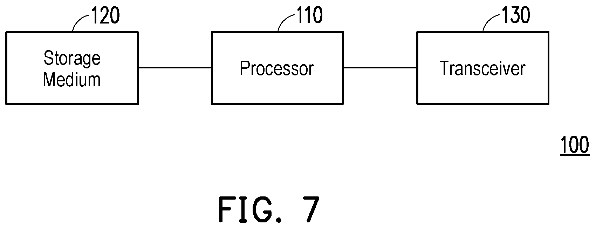

FIG. 7 illustrates a schematic diagram of a communication device 100 according to one embodiment of the present disclosure, wherein the communication device 100 may be implemented as the UE or network node as mentioned above. The communication device 100 may include a processor 110, a storage medium 120, and a transceiver 130. The processor 110 is coupled to the storage medium 120 and the transceiver 130. The processor 110 may be configured to at least to implement the methods as described in figures 1-6 as well as its exemplary embodiment and alterative variations.

The processor 110 could be implemented by using programmable units such as a microprocessor, a micro-controller, a digital signal processor (DSP), a field programmable gate array (FPGA), etc. the functions of the processor 110 may also be implemented with separate electronic devices or ICs. It should be noted that the functions of processor 110 may be implemented with either hardware or software.

The storage medium 120 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 110.

The transceiver 130 may be configured to transmit and receive signals respectively in the radio frequency. The transceiver 130 may also perform operations such as low noise amplifying, impedance matching, frequency mixing, up or down frequency conversion, filtering, amplifying, and so forth. The transceiver 130 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 130 may include an antenna array which may include one or more antennas to transmit and receive omnidirectional antenna beams or directional antenna beams.

Based on the above, information for the (subsequent) cell switching between the same or different CUs may be transmitted or received among the UE, the serving node, and the one or more (candidate) target nodes, wherein the information may be transmitted or received at a preparation stage or after a target cell (and a target node corresponding to the target cell) is selected. A backup plan may be applied in case the transmission or reception for the information fails at a previous stage. For example, if the transmission or reception for the information fails at the preparation stage, the target node may transmit the UE required information to the UE after the target node being selected. The UE may perform inter-CU cell switching or intra-CU cell switching according to the received information.

## Claims

1. A method of cell switching, performed by a first network node (100), comprising:
initiating a request message to request a cell switch related configuration for at least one candidate cell, wherein the at least one candidate cell belongs to a second network node;
receiving a request acknowledge message from the second network node, wherein the request acknowledge message comprises a first configuration for at least one accepted candidate cell;
transmitting a first message to the second network node to update information of the at least one accepted candidate cell; and
transmitting a second configuration to a user equipment.

2. The method according to claim 1, wherein the first message comprises at least one of the following: the information of the at least one accepted candidate cell, a measurement configuration, or a centralized unit identifier table, wherein the centralized unit identifier table comprises a first group identifier for a serving cell and at least one second group identifier for the at least one accepted candidate cell.

3. The method according to claim 1, further comprising:
in response to transmitting the first message, receiving a second message from the second network node.

4. The method according to claim 3, wherein the second message comprises at least one of the following: information of at least one updated accepted candidate cell, an updated measurement configuration, or an updated centralized unit identifier table.

5. The method according to claim 3, wherein the second configuration comprises information associated with the second message.

6. The method according to claim 1, wherein the first message is transmitted before the second configuration to the user equipment is transmitted.

7. The method according to claim 1, transmitting a cell switch command associated with the second network node to the user equipment.

8. The method according to claim 7, further comprising:
receiving a success message from the second network node, wherein the success message indicates that the user equipment has successfully accessed the second network node.

9. The method according to claim 8, wherein the first message is transmitted to the second network node in response to the success message being received.

10. The method according to claim 9, wherein the step of transmitting the first message to the second network node comprises:
performing a transmission of a third message to the second network node in response to the cell switch command being transmitted; and
in response to the transmission failing, transmitting the first message to the second network node in response to receiving the success message.

11. The method according to claim 10, wherein the third message comprises at least one of the following: the information of the at least one accepted candidate cell, a measurement configuration, or a centralized unit identifier table.

12. The method according to claim 7, wherein the first message is transmitted to the second network node in response to the cell switch command being transmitted.

13. The method according to claim 1, wherein the first message is transmitted from the first network node (100) to the second network node via an Xn interface.

14. A method of cell switching, performed by a user equipment (100), comprising:
receiving a configuration for at least one candidate cell from a first network node;
receiving a cell switch command from the first network node;
performing cell switching to a target cell according to the cell switch command;
transmitting a complete message to the target cell to complete the cell switching; and
in response to transmitting the complete message to the target cell, receiving a message from the target cell, wherein the message comprises at least one of the following: information of at least one updated candidate cell, an updated measurement configuration, or an updated centralized unit identifier table.

15. A first network node (100), comprising:
a transceiver (130); and
a processor (110), coupled to the transceiver (130), wherein the processor (110) is configured to:
initiate a request message to request a cell switch related configuration for at least one candidate cell via the transceiver (130), wherein the at least one candidate cell belongs to a second network node;
receive a request acknowledge message from the second network node via the transceiver (130), wherein the request acknowledge message comprises a first configuration for at least one accepted candidate cell;
transmit a first message to the second network node via the transceiver (130) to update information of the at least one accepted candidate cell; and
transmit, via the transceiver (130), a second configuration to a user equipment.

16. A user equipment (100), comprising:
a transceiver (130); and
a processor (110), coupled to the transceiver (130), wherein the processor (110) is configured to:
receive a configuration for at least one candidate cell from a first network node via the transceiver (130);
receive a cell switch command from the first network node via the transceiver (130);
perform cell switching to a target cell according to the cell switch command;
transmit a complete message to the target cell to complete the cell switching via the transceiver (130); and
in response to transmitting the complete message to the target cell, receive a message from the target cell via the transceiver (130), wherein the message comprises at least one of the following: information of at least one updated candidate cell, an updated measurement configuration, or an updated centralized unit identifier table.
